# EUROPEAN PATENT APPLICATION

(11) **EP 4 844 019 A1**
(43) Date of publication of application: **25.11.2026**
(21) Application number: 26178834.3
(22) Date of filing: 15.05.2026
(51) Int. Cl.: C08J 9/00, C08J 9/18, C08J 9/232, C08K 3/22, C08K 5/00

(54) **POLYPROPYLENE-BASED RESIN FOAMED PARTICLES AND MOLDED ARTICLE OF POLYPROPYLENE-BASED RESIN FOAMED PARTICLES OBTAINED BY MOLDING SAME IN MOLD**

(30) Priority: 19.05.2025 JP 2025083423
(71) Applicant: JSP Corporation, Tokyo 100-0005 (JP)
(72) Inventor: ITO, Yosuke, Kanuma-shi, Tochigi, 3220014 (JP)
(74) Representative: Hasegawa, Kan

(57) **Abstract**

There are provided polypropylene-based resin foamed particles which are capable of obtaining a molded article consistently exhibiting excellent flame resistance while having good in-mold moldability and suppressing occurrence of flame retardant bleed-out. The foamed particles include a brominated bisphenol flame retardant, an antimony oxide, and an inorganic hypophosphite. These components are blended in such amounts that a mass ratio of the brominated bisphenol flame retardant : the antimony oxide : the inorganic hypophosphite is 60 to 74.95 : 25 to 35 : 0.05 to 10. The brominated bisphenol flame retardant is blended into the foamed particles in an amount of 6 mass% or more but 10 mass% or less.

## Description

### CROSS-REFERENCE TO RELATED APPLICATIONS

This application claims the benefits of Japanese Patent Application No.2025-83423 filed on May 19, 2025 in the Japanese Patent Office, the disclosure of which is herein incorporated in its entirety by reference.

### BACKGROUND OF THE INVENTION

The present disclosure relates to polypropylene-based resin foamed particles and a molded article of the polypropylene-based resin foamed particles obtained by molding the polypropylene-based resin foamed particles in a mold.

Molded articles of polypropylene-based resin foamed particles obtained by molding the polypropylene-based resin foamed particles in molds (such molding is hereinafter sometimes referred to simply as "in-mold molding") are widely used as shock absorbing materials, heat insulating materials and various packaging materials, packaging/cushioning materials of electric parts and electronic parts, packaging/cushioning materials of automobile parts, and various packaging materials for other products such as precision parts and foods.

A bisphenol flame retardant or the like may be added to polypropylene-based resin foamed particles constituting a molded article of the polypropylene-based resin foamed particles in order to increase their flame resistance (for example, JP 7-309967 A).

### SUMMARY OF THE INVENTION

In order to achieve a higher level of flame resistance in conventional foamed particles into which the bisphenol flame retardant as disclosed in JP 7-309967 A is blended, the flame retardant is to be blended in a comparatively large amount.

However, when foamed particles were manufactured by blending a flame retardant in a large amount, there was a possibility that components derived from the flame retardant would be leached out over time on surfaces of a molded article of the foamed particles obtained by molding the foamed particles in a mold, that is, a so-called bleed-out phenomenon would occur easily.

The present disclosure has been made under these circumstances and is directed to providing foamed particles which are capable of obtaining a molded article consistently exhibiting excellent flame resistance while having good in-mold moldability and suppressing occurrence of flame retardant bleed-out.

The present disclosure provides:
polypropylene-based resin foamed particles including:
a brominated bisphenol flame retardant; an antimony oxide;
and an inorganic hypophosphite, wherein:
the brominated bisphenol flame retardant, the antimony oxide, and the inorganic hypophosphite are blended in such amounts that a mass ratio of the brominated bisphenol flame retardant : the antimony oxide : the inorganic hypophosphite is 60 to 74.95 : 25 to 35 : 0.05 to 10, and
the brominated bisphenol flame retardant is blended into the foamed particles in an amount of 6 mass% or more but 10 mass% or less.

Such polypropylene-based resin foamed particles are hereinafter referred to also as "the foamed particles of the disclosure."

The present disclosure can provide foamed particles which are capable of obtaining a molded article consistently exhibiting excellent flame resistance while having good in-mold moldability and suppressing occurrence of flame retardant bleed-out.

### DESCRIPTION OF EMBODIMENTS

The disclosure will be now described herein with reference to illustrative embodiments. Those skilled in the art will recognize that many alternative embodiments can be accomplished using the teachings of the present disclosure and that the disclosure is not limited to the embodiments illustrated for explanatory purposes.

### <<Foamed Particles>>

The foamed particles of the disclosure will be described.

The foamed particles of the disclosure include a polypropylene-based resin serving as a base material, a brominated bisphenol flame retardant, an antimony oxide, and an inorganic hypophosphite. It can be also considered that the foamed particles of the disclosure are composed of a resin composition including a polypropylene-based resin serving as a base material, a brominated bisphenol flame retardant, an antimony oxide, and an inorganic hypophosphite. As will be described later, the foamed particles can be obtained by foaming resin particles composed of the resin composition.

The resin composition preferably has a melting point of at least 125°C but up to 165°C, more preferably at least 125°C but up to 160°C, even more preferably at least 130°C but up to 155°C, and still more preferably at least 135°C but up to 150°C.

In this case, good in-mold moldability of the foamed particles and good compression properties of a molded article obtained by molding the foamed particles in a mold can be exhibited in a balanced manner.

The melting point of the resin composition is measured according to JIS K 7121:2012. Specifically, a test piece composed of a resin composition is prepared and its conditioning is performed according to "(2) When measuring the melting temperature after predetermined heat treatment is performed" of "3. Conditioning of test piece" in JIS K 7121: 2012.

In the conditioning, the test piece is heated from 23°C to 230°C at a heating rate of 10°C/min under the condition of a nitrogen inflow rate of 30 mL/min, kept at the temperature of 230°C for 10 minutes, and cooled to 23°C at a cooling rate of 10°C/min. After being conditioned in this way, the test piece is heated again to 230°C at the heating rate of 10°C/min to obtain a DSC curve. The top temperature of a melting peak appearing on the DSC curve obtained by the above process is taken as the melting point of the resin composition. When the DSC curve has a plurality of melting peaks, the top temperature of a melting peak having the largest height based on the baseline is taken as the melting point of the resin composition.

The resin composition preferably has a melt flow rate (MFR) of 2 to 25 g/10 min, more preferably 4 to 20 g/10 min, and even more preferably 5 to 15 g/10 min.

MFR refers to a value obtained by MFR measurement according to JIS K 7210-1:2014 under the conditions of a temperature of 230°C and a load of 2.16 kg.

In the disclosure, MFR refers to a value obtained by this method.

### [Components]

### <Polypropylene-based Resin>

The polypropylene-based resin included in the foamed particles of the disclosure will be described.

In the disclosure, the polypropylene-based resin refers to a homopolymer of propylene monomer, and a propylene copolymer containing at least 50 mass% of a structural unit derived from propylene.

Preferred examples of the propylene copolymer include copolymers of propylene, ethylene, and/or an α-olefin containing 4 to 10 carbon atoms, as exemplified by an ethylene-propylene copolymer, a butene-propylene copolymer, an ethylene-propylene-butene copolymer, an α-olefin containing 4 to 10 carbon atoms-propylene copolymer, and an ethylene-propylene-α-olefin containing 4 to 10 carbon atoms copolymer. These copolymers may be, for example, random copolymers, block copolymers or the like, but are preferably random copolymers.

The foamed particles may be composed of one, or two or more types of polypropylene-based resin.

In the foamed particles of the disclosure, the polypropylene-based resin is preferably blended into the resin composition constituting the foamed particles in an amount of 80 mass% or more and more preferably 85 mass% or more with respect to 100 mass% of the resin composition constituting the foamed particles.

The amount of the polypropylene-based resin blended into the foamed particles of the disclosure is approximately the same as its content.

### <Brominated Bisphenol Flame Retardant>

The brominated bisphenol flame retardant included in the foamed particles of the disclosure will be described.

The inventor presumes as follows: When a molded article of the foamed particles of the disclosure obtained by molding the foamed particles in a mold is heated, it is thermally decomposed to generate flammable gas, but non-flammable hydrogen bromide generated by thermal decomposition of the brominated bisphenol flame retardant serves to dilute the flammable gas, and in addition, traps and stabilizes hydroxy radical (OH) and hydrogen radical (H) that improve combustibility of the flammable gas, thus suppressing combustibility of the molded article.

Examples of the brominated bisphenol flame retardant include brominated compounds of bisphenol A, bisphenol F, bisphenol S or a derivative thereof. More specifically, brominated bisphenol A flame retardants such as 2,2-bis(4-(2,3-dibromo-2-methylpropoxy)-3,5-dibromophenyl)propane, and 2,2-bis(4-(2,3-dibromopropoxy)-3,5-dibromophenyl)propane; and brominated bisphenol S flame retardants such as bis[3,5-dibromo-4-(2,3-dibromopropoxy)phenyl]sulfone are used. These brominated bisphenol flame retardants may be used alone or in combination of two or more.

The brominated bisphenol flame retardant is preferably a brominated bisphenol A flame retardant because the flame resistance of a molded article to be obtained will be easily increased in a more consistent manner.

In the foamed particles of the disclosure, the brominated bisphenol flame retardant is blended in an amount of 6 mass% or more but 10 mass% or less, preferably 7.0 mass% or more but 9.5 mass% or less, and more preferably 7.5 mass% or more but 9 mass% or less.

When the brominated bisphenol flame retardant is blended in too small an amount, the flame resistance tends to be reduced. When the brominated bisphenol flame retardant is blended in too large an amount, a bleed-out phenomenon tends to occur easily on a molded article obtained from the foamed particles of the disclosure. Occurrence of the bleed-out phenomenon may cause a powdery substance derived from the bisphenol flame retardant to appear on surfaces of the molded article, thus deteriorating its appearance.

The amount of the brominated bisphenol flame retardant blended into the foamed particles of the disclosure can also be determined from the foamed particles using the following method.

First, a mixed solution obtained by adding a predetermined amount of foamed particles to o-dichlorobenzene is heated at about 150°C to dissolve a polypropylene-based resin and a brominated bisphenol flame retardant constituting the foamed particles in the o-dichlorobenzene.

Then, the mixed solution is cooled to deposit the polypropylene-based resin from the mixed solution, and thereafter the polypropylene-based resin and other deposits (an antimony oxide, a hypophosphite, and the like) are removed from the mixed solution to obtain a filtrate containing the brominated bisphenol flame retardant dissolved therein.

Then, the filtrate is dried to obtain a dry solid and its mass is measured. The mass is divided by the weight of the foamed particles used for the measurement and the resulting value is expressed in percentage, whereby the amount of the brominated bisphenol flame retardant blended into the foamed particles can be calculated.

### <Antimony Oxide>

The antimony oxide included in the foamed particles of the disclosure will be described.

As described above, the inventor presumes that, when a molded article of the foamed particles of the disclosure obtained by molding the foamed particles in a mold is heated, non-flammable hydrogen bromide generated by thermal decomposition of the brominated bisphenol flame retardant serves to dilute flammable gas, and in addition, traps and stabilizes hydroxy radical (OH) and hydrogen radical (H) that improve combustibility of the flammable gas, thus suppressing combustibility of the molded article. The inventor also presumes that the antimony oxide has the effect of promoting the action of the brominated bisphenol flame retardant as described above to increase the flame resistance.

Examples of the antimony oxide in the disclosure include antimony trioxide, antimony tetroxide, and antimony pentoxide.

In the foamed particles of the disclosure, the antimony oxide is preferably blended in an amount of 1 mass% or more but 10 mass% or less, more preferably 2 mass% or more but 6 mass% or less, and even more preferably 3.8 mass% or more but 4.5 mass% or less.

When the amount of the blended antimony oxide is within the above-defined range, a molded article which consistently exhibits excellent flame resistance is easily obtained.

The amount of the antimony oxide blended into the foamed particles of the disclosure can also be determined from the foamed particles using the following method.

First, a mixed solution obtained by adding a predetermined amount of foamed particles to an acid solution such as concentrated nitric acid is heated at about 230°C to dissolve the foamed particles and deposit insoluble matter derived from antimony oxide.

Then, the insoluble matter separated from the mixed solution by filtering is dissolved in an acid solution to prepare a measurement solution, which is subjected to ICP emission spectrometry to quantify the content of antimony derived from the antimony oxide.

Then, the mass of the antimony oxide contained in the solution is calculated based on the resulting antimony content, and is divided by the mass of the foamed particles used for the measurement and the resulting value is expressed in percentage, whereby the amount of the antimony oxide blended into the foamed particles can be calculated.

### <Inorganic Hypophosphite>

The inorganic hypophosphite included in the foamed particles of the disclosure will be described.

The inventor presumes as follows: When a molded article of the foamed particles of the disclosure obtained by molding the foamed particles in a mold is heated, a hypophosphite is thermally decomposed to cause dehydration and carbonization, thereby suppressing occurrence of flammable gas caused by thermal decomposition of the molded article. The inventor further presumes that the hypophosphite serves to form a carbonized layer at a combustion part of the molded article and the layer blocks a combustion reaction.

In the disclosure, the inorganic hypophosphite refers to a metal salt of hypophosphorous acid represented by chemical formula: M(H₂PO₂)ₘ (where M is a metallic element and m is an integer of 1 to 3).

The inorganic hypophosphite is preferably at least one selected from the group consisting of sodium hypophosphite (Na(H₂PO₂)), magnesium hypophosphite (Mg(H₂PO₂)₂), aluminum hypophosphite (Al(H₂PO₂)₃), calcium hypophosphite (Ca(H₂PO₂)₂), and zinc hypophosphite (Zn(H₂PO₂)₂), more preferably aluminum hypophosphite and/or calcium hypophosphite, and even more preferably aluminum hypophosphite.

The inorganic hypophosphite is preferably blended into the foamed particles of the disclosure in an amount of 0.05 mass% or more but 1 mass% or less, more preferably 0.07 mass% or more but 0.7 mass% or less, even more preferably 0.08 mass% or more but 0.5 mass% or less, and still more preferably 0.09 mass% or more but 0.3 mass% or less. When the amount of the blended inorganic hypophosphite is within the above-defined range, a molded article which consistently exhibits excellent flame resistance while suppressing reduction of in-mold moldability of the foamed particles is easily obtained.

The amount of the inorganic hypophosphite blended into the foamed particles of the disclosure can also be determined from the foamed particles using the following method.

First, a mixed solution obtained by adding a predetermined amount of foamed particles to an acid solution such as concentrated nitric acid is heated at about 230°C to dissolve the foamed particles, and a phosphorus component and a metallic element component derived from an inorganic hypophosphite (for example, aluminum when aluminum hypophosphite is used as the inorganic hypophosphite) therein.

Then, ultrapure water is used to adjust the volume to a predetermined value.

Then, the volume-adjusted solution is subjected to ICP emission spectrometry to quantify the contents of phosphorus and the metallic element derived from the inorganic hypophosphite.

Then, the mass of the inorganic hypophosphite contained in the solution is calculated based on the resulting contents of the phosphorus and the metallic element, and is divided by the mass of the foamed particles used for the measurement and the resulting value is expressed in percentage, whereby the amount of the inorganic hypophosphite blended into the foamed particles can be calculated.

The foamed particles of the disclosure include the brominated bisphenol flame retardant, the antimony oxide, and the inorganic hypophosphite as described above. The mass ratio of these materials, more specifically the mass ratio of the amounts of the blended brominated bisphenol flame retardant, antimony oxide, and inorganic hypophosphite, as expressed by brominated bisphenol flame retardant : antimony oxide : inorganic hypophosphite is preferably 60 to 74.95 : 25 to 35 : 0.05 to 10, and more preferably 60 to 69.5 : 30 to 35 : 0.5 to 5.

The mass ratio is determined so that the total amount of the three blended materials including the brominated bisphenol flame retardant, antimony oxide, and inorganic hypophosphite becomes 100.

The mass ratio of the amount of the blended inorganic hypophosphite to the amount of the blended brominated bisphenol flame retardant as expressed by (amount of blended inorganic hypophosphite / amount of blended brominated bisphenol flame retardant) is preferably 0.01 or more but 0.08 or less, more preferably 0.011 or more but 0.07 or less, and even more preferably 0.012 or more but 0.06 or less. In this case, a molded article which consistently exhibits such a high level of flame resistance as to achieve, for example, the V-0 rating in the UL94 test while keeping good in-mold moldability of foamed particles is easily obtained.

The mass ratio of the amount of the blended antimony oxide to the amount of the blended inorganic hypophosphite as expressed by (amount of blended antimony oxide / amount of blended inorganic hypophosphite) is preferably 7 or more but 50 or less, more preferably 8 or more but 46 or less, and even more preferably 8.3 or more but 42 or less. In this case, a molded article which consistently exhibits a high level of flame resistance while keeping good in-mold moldability of foamed particles is easily obtained.

The mass ratio of the amount of the blended antimony oxide to the amount of the blended brominated bisphenol flame retardant as expressed by (amount of blended antimony oxide / amount of blended brominated bisphenol flame retardant) is preferably 0.1 or more but 1 or less, more preferably 0.2 or more but 0.8 or less, and even more preferably 0.3 or more but 0.7 or less. In this case, a molded article which consistently exhibits a high level of flame resistance is easily obtained.

In the foamed particles of the disclosure, the total of the amounts of the blended brominated bisphenol flame retardant, antimony oxide, and inorganic hypophosphite is preferably 10 mass% or more but 15 mass% or less, and more preferably 12 mass% or more but 14 mass% or less. In this case, a molded article which consistently exhibits a high level of flame resistance while keeping good in-mold moldability of the foamed particles is easily obtained.

In the foamed particles of the disclosure, the ratio of the amount of the blended inorganic hypophosphite to the total of the amounts of the blended brominated bisphenol flame retardant and antimony oxide is preferably 0.005 or more but 0.05 or less, and more preferably 0.006 or more but 0.04 or less. In this case, a molded article which consistently exhibits a high level of flame resistance while keeping good in-mold moldability of the foamed particles is easily obtained.

As described above, the foamed particles of the disclosure include the polypropylene-based resin, and also include the brominated bisphenol flame retardant, the antimony oxide, and the inorganic hypophosphite at a specified mass ratio. When a fire source approaches an article formed in a mold using the foamed particles including these components, its combustion is suppressed by the actions as described above.

When a brominated bisphenol flame retardant and an antimony oxide were conventionally blended into foamed particles, the brominated bisphenol flame retardant was to be blended in a comparatively large amount in order to achieve a high level of flame resistance. In this case, however, there was a possibility of easily causing a bleed-out phenomenon on a molded article of the foamed particles obtained by molding the foamed particles in a mold.

In contrast, in a molded article of the foamed particles of the disclosure obtained by molding the foamed particles in a mold, it is considered as follows: A combustion reaction of the molded article is less likely to progress by blending the brominated bisphenol flame retardant and the antimony oxide into the foamed particles at a specified mass ratio; and self-extinguishing properties at the time of combustion of the molded article can also be enhanced by blending the inorganic hypophosphite at a specified mass ratio. Therefore, it is also considered as follows: It is possible to obtain a molded article consistently exhibiting a high level of flame resistance while reducing the amount of the brominated bisphenol flame retardant included in the foamed particles to a comparatively low level; and also obtain a molded article capable of achieving, for example, the V-0 rating in the UL94 test while suppressing occurrence of the bleed-out phenomenon.

### <Melamine Flame Retardant>

The foamed particles of the disclosure may include a melamine flame retardant. The melamine flame retardant will be described.

The melamine flame retardant in the disclosure refers to a flame retardant containing melamine represented by structural formula (1) shown below as a partial structure.

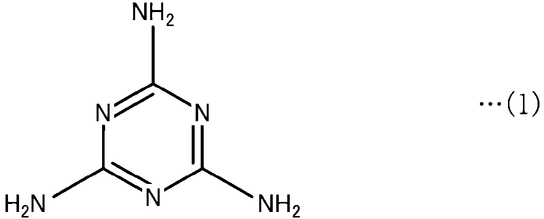

Examples of the melamine flame retardant include salts of melamine with acids exhibiting flame resistance such as sulfuric acid, polyphosphoric acid, cyanuric acid, pyrophosphoric acid, and hydrobromic acid.

The melamine flame retardant is preferably at least one salt selected from the group consisting of melamine sulfate, melamine polyphosphate, melamine cyanurate, melamine pyrophosphate, and melamine hydrobromide, and is more preferably melamine hydrobromide. The melamine hydrobromide is further preferably a compound represented by structural formula (2) shown below:

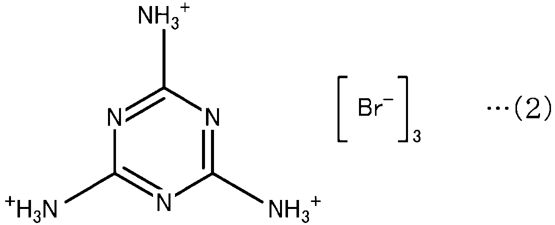

The amount of the melamine flame retardant blended into the foamed particles of the disclosure is not particularly limited and is preferably 0.01 mass% or more but 1 mass% or less, and more preferably 0.02 mass% or more but 0.5 mass% or less. The amount of the melamine flame retardant blended into the foamed particles of the disclosure is approximately the same as its content.

### <Other Components>

As above, the foamed particles of the disclosure include the brominated bisphenol flame retardant, the antimony oxide, and the inorganic hypophosphite and may further include the melamine flame retardant. Then, the foamed particles of the disclosure may further include any other resin component and an additive within ranges within which the intended purpose of the disclosure can be achieved.

Examples of such other resin component include a synthetic resin other than the polypropylene-based resin, a synthetic rubber, and an elastomer.

Specific examples of the synthetic resin include ethylene resins such as high-density polyethylene, low-density polyethylene, linear low-density polyethylene, ethylene-vinyl acetate copolymer, ethylene-acrylic acid copolymer, and ethylene-methacrylic acid copolymer; and styrene resins such as polystyrene and styrene-maleic anhydride copolymer.

Examples of the synthetic rubber include ethylene-propylene rubber, ethylene-1-butene rubber, propylene-1-butene rubber and styrene-butadiene rubber, and hydrogenated products thereof, isoprene rubber, neoprene rubber, and nitrile rubber.

Examples of the elastomer include styrene-butadiene block copolymer elastomer and hydrogenated products thereof.

Such other resin component is preferably blended in an amount of 30 parts by mass or less, more preferably 20 parts by mass or less, even more preferably 10 parts by mass or less, and still more preferably 5 parts by mass or less with respect to 100 parts by mass of the polypropylene-based resin.

An example of the additive which may be contained in the foamed particles of the disclosure is a cell control agent. Examples of the cell control agent include inorganic powdery substances such as zinc borate, talc, calcium carbonate, borax, and aluminum hydroxide. The average cell diameter of the foamed particles obtained is easily adjusted within a desired range by blending the cell control agent.

The cell control agent is preferably blended in an amount of 0.005 to 1 part by mass with respect to 100 parts by mass of the polypropylene-based resin.

Examples of the additive which may be contained in the foamed particles of the disclosure include an antioxidant, a UV absorber, an antistatic agent, a flame retardant, a metal deactivator, a crystal nucleating agent, a plasticizer, a light stabilizer, an antimicrobial agent and a colorant.

The additives are preferably blended in an amount of 20 parts by mass or less, more preferably 10 parts by mass or less, and even more preferably 5 parts by mass or less with respect to 100 parts by mass of the polypropylene-based resin.

### [Physical Properties, Structure and the like]

The foamed particles of the disclosure preferably have a bulk density of 10 kg/m³ or more but 200 kg/m³ or less, more preferably 50 kg/m³ or more but 190 kg/m³ or less, and even more preferably 90 kg/m³ or more but 180 kg/m³ or less.

The bulk density of the foamed particles of the disclosure is expressed by a value obtained by measurement using a method described in Examples to be referred to later.

When conventional foamed particles have a high bulk density of, for example, 100 kg/m³ or more, during combustion of a molded article obtained, drips of melted matter are more likely to be formed due to an increased amount of resin and combustibility tends to be increased.

In contrast, the foamed particles of the disclosure are extremely excellent in that a molded article having good flame resistance can be obtained even at a high bulk density (of, for example, about 180 kg/m³).

In view of this, the bulk density of the foamed particles may be 100 kg/m³ or more, 120 kg/m³ or more, 150 kg/m³ or more, or 160 kg/m³ or more.

The foamed particles preferably have an average external diameter of 1 to 5 mm, and more preferably 2 to 4 mm. The foamed particles having the average external diameter as above are excellent in packing into a mold during molding.

The average external diameter of the foamed particles is determined as follows.

First, a foamed particle is cut at a position at which its cut surface has approximately the largest area.

Next, a photo of the cut surface of the foamed particle is taken to determine the cross-sectional area of the foamed particle, and the diameter of a virtual perfect circle having the same area as the above area is calculated and taken as the external diameter of the foamed particle.

Then, this operation is repeated on randomly selected 50 foamed particles, and a simple average value of measured values obtained is taken as the average external diameter of the foamed particles.

The shape of the foamed particles is not particularly limited. The foamed particles may have, for example, a cylindrical, rugby-ball-like, spherical, or tubular shape.

The foamed particles preferably have such a crystal structure that a first melting peak and one or more second melting peaks located on a higher temperature side than the first melting peak appear on a DSC curve. When having such a crystal structure, the foamed particles can achieve better in-mold moldability. The first melting peak is a melting peak due to melting of a component intrinsic to a material constituting the foamed particles, and may also be called a melting peak appearing due to melting of crystals usually included in the material constituting the foamed particles. The first melting peak is also called "intrinsic peak." The second melting peak appearing on the higher temperature side than the first melting peak is also called "high temperature peak." The high temperature peak is presumed to appear due to melting of secondary crystals formed in a material component during the manufacturing process of the foamed particles. In other words, when the high temperature peak appears on the DSC curve, the secondary crystals are presumed to be formed in the material component.

The foamed particles of the disclosure may have a multi-layer structure. For example, each foamed particle may be of a type including a foamed particle body (core layer in a foamed state) and a coating layer covering the foamed particle body. In this case, a resin composition constituting the foamed particle body corresponds to the resin composition constituting the foamed particles of the disclosure.

The coating layer may be composed of, for example, polyolefin-based resin.

Crystalline polyolefin-based resin having a lower melting point than that of a material constituting the foamed particle body (core layer), and amorphous polyolefin-based resin having a lower softening point than the melting point of the material constituting the foamed particle body (core layer) may be suitably used for the polyolefin-based resin.

The polyolefin-based resin is preferably polypropylene-based resin and/or polyethylene-based resin, and more preferably polypropylene-based resin.

The polypropylene-based resin that may be preferably used is a propylene copolymer which is a copolymer of propylene, ethylene, and/or an α-olefin having 4 or more carbon atoms.

The propylene copolymer preferably contains at least 60 mol%, more preferably 80 mol%, and even more preferably 90 mol% of a propylene component unit. Examples of the propylene copolymer include a propylene-ethylene copolymer, a propylene-butene copolymer, and a propylene-ethylene-butene copolymer. The propylene copolymer is preferably a random copolymer.

The polyolefin resin for forming the coating layer preferably has a melting point of 100°C or more but less than 160°C, more preferably 110°C or more but 158°C or less, and even more preferably 120°C or more but 155°C or less.

The difference between the melting point of the foamed particle body (core layer) and that of the coating layer is, in general, preferably 1°C or more but 40°C or less, more preferably 2°C or more but 35°C or less, and even more preferably 5°C or more but 30°C or less. In this case, the foamed particles are easily fused together even at comparatively low molding steam pressure, and a molded article having good compression properties is easily obtained in a consistent manner.

### <<Molded Article>>

A molded article of polypropylene-based resin foamed particles which is obtained by molding the foamed particles of the disclosure in a mold is hereinafter referred to also as "the molded article of the disclosure."

The molded article of the disclosure will be described.

The molded article of the disclosure preferably has a density (molded article density) of 10 to 200 kg/m³, more preferably 50 to 190 kg/m³, and even more preferably 90 to 180 kg/m³.

From the viewpoint that a molded article having excellent flame resistance can be obtained from the foamed particles of the disclosure even at a comparatively high bulk density, the density of the molded article may be 100 kg/m³ or more, 120 kg/m³ or more, 150 kg/m³ or more, or 160 kg/m³ or more.

A method of measuring the density of the molded article (molded article density) will be described in Examples to be referred to later.

The molded article of the disclosure preferably has a compressive strength at 50% of 0.1 to 3.0 MPa, more preferably 0.5 to 2.5 MPa, and even more preferably 0.8 to 2.2 MPa.

A method of measuring the compressive strength at 50% of the molded article will be described in Examples to be referred to later.

The molded article of the disclosure consistently exhibits excellent flame resistance. The flame resistance in the molded article of the disclosure is at such a level as to meet UL94 V-0 and the molded article of the disclosure exhibits extremely high flame resistance. The molded article of the disclosure can exhibit such extremely high flame resistance with high frequency, that is, consistently.

### <<Manufacturing Method>>

Manufacturing methods of the foamed particles of the disclosure and the molded article of the disclosure will be described.

The foamed particles of the disclosure can be obtained by forming resin particles containing predetermined materials at a predetermined mass ratio, and then foaming the formed resin particles. The molded article of the disclosure can be obtained by molding the foamed particles of the disclosure in a mold.

In the following description, a manufacturing method of resin particles is followed by manufacturing methods of the foamed particles of the disclosure and the molded article of the disclosure.

### <Manufacturing Method of Resin Particles>

First, the above-mentioned brominated bisphenol flame retardant, antimony oxide, and inorganic hypophosphite, and optionally a melamine flame retardant, a cell control agent, and other resin components are prepared. Then, these are mixed with polypropylene-based resin to manufacture resin particles composed of a resin composition including the polypropylene-based resin serving as a base material, the brominated bisphenol flame retardant, the antimony oxide, and the inorganic hypophosphite. The resin particles can be manufactured by a conventionally known method. The resin composition constituting the resin particles may contain the melamine flame retardant, cell control agent, and the like.

The respective components are blended so that the mass ratio of the amounts of the blended brominated bisphenol flame retardant, antimony oxide, and inorganic hypophosphite as expressed by brominated bisphenol flame retardant : antimony oxide : inorganic hypophosphite is 60 to 74.95 : 25 to 35 : 0.05 to 10.

The mass ratio is determined so that the total amount of the three blended materials including the brominated bisphenol flame retardant, antimony oxide, and inorganic hypophosphite becomes 100.

The resin particles can be obtained by heating and kneading the materials in an extruder or the like to obtain a resin melt, extruding the resin melt from the extruder, and pelletizing the resin melt by a strand-cut process, a hot-cut process, an underwater process, or the like.

According to the manufacturing method of the disclosure, particles each having a core layer and a coating layer covering the core layer may be foamed to obtain foamed particles. In this case, resin particles each having a core layer and a coating layer can be manufactured, for example, by a method to be described next.

First, an extruder for core layer formation, an extruder for coating layer formation, and a die for multi-layer strand formation are prepared. Each of them may be of any conventionally known type. The extruder for core layer formation and the extruder for coating layer formation are connected, on their downstream sides, to the die for multi-layer strand formation. The die for multi-layer strand formation has a coextrudable structure and also has a structure capable of laminating resin melts for forming the core layer and the coating layer in the die.

Then, a material for forming the core layer is supplied to the extruder for core layer formation, and is melted and kneaded in the extruder to obtain a resin melt. A material for forming the coating layer is supplied to the extruder for coating layer formation, and is melted and kneaded in the extruder to obtain a resin melt. Then, these two resin melts are continuously extruded from the extruders and continuously introduced into the die for multi-layer strand formation.

These resin melts are joined together in the die for multi-layer strand formation, and are continuously extruded through small holes of the die to form string-shaped multi-layer strands. The multi-layer strands are of a two-layer structure including the core layer and the coating layer.

The mass ratio between the core layer and the coating layer is preferably 99.5:0.5 to 80:20, more preferably 99:1 to 85:15, and even more preferably 98:2 to 90:10.

When the mass ratio between the core layer and the coating layer is within the above-defined range, a molded article having good compressive strength can be manufactured and foamed particles capable of molding in a mold at comparatively low molding steam pressure can be obtained consistently.

The extruded strands are cooled with water and cut by a pelletizer to form columnar resin particles.

The coating layer may not cover the whole of the core layer as long as the object of the disclosure can be achieved.

### <Manufacturing Method of Foamed Particles of Disclosure>

The resin particles obtained as described above are used to manufacture the foamed particles of the disclosure.

The manufacturing method of the foamed particles of the disclosure is not particularly limited and, for example, a conventionally known method may be used. Specifically, the foamed particles of the disclosure can be obtained by, for example, a direct foaming method as described below.

First, resin particles are charged into a sealed vessel such as an autoclave and dispersed in a dispersion medium such as water or an alcohol (preferably water).

A dispersant is preferably charged into the sealed vessel together with the resin particles because the resin particles are less likely to be fused together in the sealed vessel.

Any dispersant can be used irrespective of whether it is of an organic or inorganic type, but a fine-grained inorganic substance is preferred for ease of handling. Examples thereof include kaolin, mica, clay and other natural or synthetic clay minerals, aluminum oxide, tricalcium phosphate, magnesium pyrophosphate, zinc oxide, titanium oxide, basic magnesium carbonate, basic zinc carbonate, calcium carbonate, and iron oxide.

The dispersant is preferably used in an amount of 0.001 to 5 parts by mass with respect to 100 parts by mass of the resin particles.

A dispersion aid may be charged into the sealed vessel together with the resin particles because it serves to strengthen the dispersion force of the dispersant.

Examples of the dispersion aid include magnesium chloride, magnesium nitrate, magnesium sulfate, aluminum chloride, aluminum nitrate, and aluminum sulfate.

The dispersion aid is preferably used in an amount of 0.0001 to 1 part by mass with respect to 100 parts by mass of the resin particles.

A surfactant is preferably charged into the sealed vessel together with the resin particles.

An example of the surfactant includes an anionic surfactant such as sodium dodecylbenzenesulfonate.

Next, a foaming agent is charged into the sealed vessel to impregnate the resin particles with the foaming agent. In this process, the interior of the sealed vessel is heated and pressurized, and kept at predetermined temperature and pressure, whereby the resin particles are more likely to be impregnated with the foaming agent.

The pressure within the sealed vessel in terms of gauge pressure is preferably 0.5 to 4.0 MPa(G) and more preferably 1.0 to 4.0 MPa(G). The temperature within the sealed vessel is preferably set to 130 to 170°C.

The resin particles containing the foaming agent can be thus obtained.

Examples of the foaming agent include organic physical foaming agents such as aliphatic hydrocarbons (e.g., propane, butane, isobutane, pentane, isopentane, hexane, and heptane), cyclic aliphatic hydrocarbons (e.g., cyclobutane, and cyclohexane), and halogenated hydrocarbons (e.g., chlorofluoromethane, trifluoromethane, 1,2-difluoroethane, 1,2,2,2-tetrafluoroethane, 2,3,3,3-tetrafluoropropene, trans-1,3,3,3-tetrafluoropropene, trans-1-chloro-3,3,3-trifluoropropene, methyl chloride, ethyl chloride, and methylene chloride); and inorganic physical foaming agents such as nitrogen, oxygen, air, carbon dioxide, helium, argon, and water.

The foaming agent is preferably added in an amount of 0.1 to 30 parts by mass and more preferably 0.5 to 15 parts by mass with respect to 100 parts by mass of the resin particles.

Next, one end of the interior of the sealed vessel under the liquid surface is opened to discharge the content of the sealed vessel in an atmosphere having a lower pressure than the interior of the vessel, thereby obtaining foamed particles.

A step of adjusting the crystal structure of a resin component constituting resin particles may be performed between dispersion of the resin particles in an aqueous medium and their foaming. Foamed particles having excellent in-mold moldability and also having good mechanical strength can be easily obtained by foaming after adjusting the crystal structure of the resin component.

The method of adjusting the crystal structure of the resin component is, for example, as described below. First, a holding step is performed which includes: holding resin particles in a temperature range within which the temperature is equal to or higher than the melting point - 15°C of the resin particles and is equal to or lower than the melting point + 15°C of the resin particles, for a sufficient time, preferably for about 10 to 60 minutes. The resin particles having undergone the holding step are foamed, whereby foamed particles having a crystal structure having the above-mentioned second melting peak can be obtained. The temperature of the interior of the vessel at the time of foaming is preferably equal to or higher than the melting point - 5°C of the resin particles but equal to or lower than the melting point + 10°C of the resin particles.

From the viewpoint that foamed particles having a lower bulk density (higher foaming magnification) are obtained, a two-stage foaming step which includes further foaming the foamed particles obtained may be performed. For example, first-stage foamed particles obtained by foaming resin particles by a direct foaming method or the like (first-stage foamed particles) are pressurized with air or the like to increase the pressure (internal pressure) within cells of the first-stage foamed particles and the first-stage foamed particles are further foamed by heating with steam or the like. Foamed particles having a lower bulk density can be thus obtained.

### <Manufacturing Method of Molded Article of Disclosure>

The method of manufacturing the molded article of the disclosure from the foamed particles of the disclosure is not particularly limited and the molded article of the disclosure can be manufactured by, for example, a conventionally known method.

A molded article can be manufactured by, for example, a conventionally known method called an in-mold heating molding method. Specifically, a molded article can be manufactured by a batch type in-mold heating molding method which includes: charging foamed particles into a molding space (cavity) of a mold capable of heating and cooling, opening and closing, and sealing after increasing its internal pressure when necessary; supplying steam to heat the foamed particles in the mold for expansion (secondary foaming), thereby fusing the foamed particles together; then cooling; and taking the foamed particles out of the mold to obtain the molded article having the shape of the molding space of the mold.

Many molding machines already exist as molding machines for use in the batch type in-mold heating molding method. In terms of increasing productivity of molded articles, for example, in that the amount of energy used during molding can be reduced, steam supplied to a mold during in-mold molding preferably has a pressure of 0.40 MPa(G) or less, and more preferably 0.38 MPa(G) or less.

Molded articles can also be obtained by, for example, in-mold molding methods as described below.

An example is a compression molding method which includes: charging foamed particles into a molding space under atmospheric pressure or reduced pressure, the molding space being formed with a mold having a pair of two halves including a core and a cavity; compressing to reduce the volume of the molding space by 5 to 70%; and then introducing a heat medium such as steam into the molding space for thermal fusion bonding of the foamed particles (for example, JP 46-38359 B).

Another example is a pressure molding method which includes: pretreating foamed particles with one, or two or more volatile foaming agents or inorganic gases to enhance secondary foaming power of the foamed particles; then charging the foamed particles into a molding space under atmospheric pressure or reduced pressure while keeping the secondary foaming power, the molding space being formed with a mold having a pair of two halves including a core and a cavity; and then introducing a heat medium into the molding space for thermal fusion bonding of the foamed particles (for example, JP 51-22951 B).

Still another example is a compression charging method which includes: charging, into a molding space pressurized with compressed gas to the atmospheric pressure or above, foamed particles pressurized to the molding space pressure or above; and introducing a heat medium such as steam into the molding space for thermal fusion bonding of the foamed particles (for example, JP 4-46217 B).

The disclosure includes the following embodiments (1) to (8):
(1) Polypropylene-based resin foamed particles including:
   a brominated bisphenol flame retardant; an antimony oxide;
   and an inorganic hypophosphite, wherein:
   the brominated bisphenol flame retardant, the antimony oxide, and the inorganic hypophosphite are blended in such amounts that a mass ratio of the brominated bisphenol flame retardant : the antimony oxide : the inorganic hypophosphite is 60 to 74.95 : 25 to 35 : 0.05 to 10, and
   the brominated bisphenol flame retardant is blended into the foamed particles in an amount of 6 mass% or more but 10 mass% or less.
(2) The polypropylene-based resin foamed particles according to (1) above, wherein the inorganic hypophosphite is blended into the polypropylene-based resin foamed particles in an amount of 0.05 mass% or more but 1 mass% or less.
(3) The polypropylene-based resin foamed particles according to (1) or (2) above, wherein a mass ratio of the amount of the blended inorganic hypophosphite to the amount of the blended brominated bisphenol flame retardant is 0.01 or more but 0.08 or less.
(4) The polypropylene-based resin foamed particles according to any one of (1) to (3) above, wherein a mass ratio of the amount of the blended antimony oxide to the amount of the blended inorganic hypophosphite is 7 or more but 50 or less.
(5) The polypropylene-based resin foamed particles according to any one of (1) to (4) above, wherein the brominated bisphenol flame retardant is a brominated bisphenol A flame retardant.
(6) The polypropylene-based resin foamed particles according to any one of (1) to (5) above, including a melamine flame retardant.
(7) The polypropylene-based resin foamed particles according to any one of (1) to (6) above, having a bulk density of 10 kg/m³ or more but 200 kg/m³ or less.
(8) A molded article of the polypropylene-based resin foamed particles according to any one of (1) to (7) above, the molded article being obtained by molding the polypropylene-based resin foamed particles in a mold.

### EXAMPLES

The present disclosure is described below more specifically by way of examples. However, the present disclosure should not be construed as being limited to the examples.

Resin particles containing materials including a polypropylene-based resin, a brominated bisphenol flame retardant, an antimony oxide, an inorganic hypophosphite, and a melamine flame retardant in blending amounts shown in Table 1 were made and foamed to obtain foamed particles, which were then used to obtain a molded article.

A detailed description is given below.

### <Materials>

The following materials were prepared.
* Polypropylene-based resin: Ethylene-propylene random copolymer (melting point: 143°C; MFR: 7 g/10 min);
* Brominated bisphenol flame retardant: Tetrabromobisphenol A bis (2,3-dibromopropyl ether);
* Antimony oxide: Antimony trioxide;
* Inorganic hypophosphite: Aluminum hypophosphite;
* Melamine flame retardant: Melamine hydrobromide; and
* Cell control agent: Zinc borate.

In Table 1, the blending amounts (mass%) of the brominated bisphenol flame retardant, antimony oxide, inorganic hypophosphite and melamine flame retardant are denoted by a, b, c, and d, respectively.

### <Fabrication of Resin Particles>

An extruder having an internal diameter of 26 mm and equipped with a strand forming die at its exit side was used.

First, a polypropylene-based resin, a brominated bisphenol flame retardant, an antimony oxide, an inorganic hypophosphite, a melamine flame retardant, and a cell control agent were supplied to the extruder and kneaded with heating in the extruder to obtain a resin melt. The polypropylene-based resin, the brominated bisphenol flame retardant, the antimony oxide, the inorganic hypophosphite, and the melamine flame retardant were supplied to the extruder in blending amounts shown in Table 1. The cell control agent was supplied to the extruder in an amount of 0.1 parts by mass with respect to 100 parts by mass of the polypropylene-based resin.

Next, the resin melt was guided to the strand forming die and extruded in a strand shape from nozzles at the tip of the die. A strand-shaped extrudate was taken out, cooled with water, and cut into a suitable length using a pelletizer to obtain resin particles composed of a resin composition including the polypropylene-based resin serving as the base material, the brominated bisphenol flame retardant, the antimony oxide, and the inorganic hypophosphite.

The average mass of each resin particle was 1 mg.

### <Fabrication of Foamed Particles>

The resin particles (100 parts by mass) obtained by the above process, an aqueous medium (water; 700 parts by mass), sodium dodecylbenzenesulfonate (surfactant; 0.04 parts by mass; as an effective component), and kaolin (dispersant; 0.6 parts by mass) were charged into a 5L autoclave; carbon dioxide (foaming agent) was supplied with stirring to increase the temperature and pressure within the autoclave to a temperature (foaming temperature) and a pressure (foaming pressure) shown in the table; and this state was held for 15 minutes. The bulk density of foamed particles can be adjusted by controlling the amount of carbon dioxide (foaming agent) to be supplied and the temperature during foaming.

Next, one end of the autoclave was opened and the content of the autoclave was discharged under atmospheric pressure to foam the resin particles, thereby obtaining foamed particles.

While the content of the autoclave was discharged from the autoclave, carbon dioxide was supplied to the autoclave so that the autoclave was kept at the internal pressure of the autoclave just before discharging.

Next, the resulting foamed particles were stored at 23°C for 24 hours in an atmosphere of 50% relative humidity.

Then, the MFR of the resin composition constituting the foamed particles and their bulk density were measured by the following methods. The results are shown in Table 1.

The resulting foamed particles were subjected to differential scanning calorimetry involving heating from 23°C to 230°C at a heating rate of 10°C/min according to JIS K7122:2012, thereby obtaining a DSC curve. The flow rate of nitrogen gas in a measurement environment was set to 30 mL/min. As a result, a first melting peak and one or more second melting peaks located on a higher temperature side than the first melting peak appeared on the DSC curve.

### [MFR]

Measurement was performed according to JIS K 7210-1:2014 under the conditions of a temperature of 230°C and a load of 2.16 kg.

### [Bulk Density]

First, the foamed particles were held at 60°C for 2 hours in a 1 atm environment to be dried and were then charged into a graduated cylinder. Further, the bottom surface of the graduated cylinder was tapped to stabilize the positions in a height direction of the foamed particles (group of foamed particles) charged into the graduated cylinder.

The scale of the graduated cylinder was read in this state to measure the bulk volume of the group of foamed particles. The bulk density (unit: kg/m³) of the foamed particles was calculated by unit conversion of a value obtained by dividing the mass of the group of foamed particles in the graduated cylinder by the bulk volume.

### <Fabrication of Molded Article>

Next, the resulting foamed particles were used to fabricate a molded article. The molded article was fabricated as described below.

First, a molding machine capable of molding foamed particles with steam in a mold was prepared. The molding machine has the mold made up of a pair of two halves and capable of molding a tabular molded article with dimensions of 250 mm in length, 200 mm in width, and 50 mm in thickness. Then, the foamed particles were charged into a molding space (cavity) of the mold.

Next, steam was supplied to the chamber of the mold to perform in-mold molding. In the in-mold molding, steam was first supplied to the mold for 5 seconds while opening a drain valve of the mold, thereby performing preliminary heating. Then, the drain valve was closed to perform one-side heating by supplying steam from one surface side of the mold until a pressure lower by 0.08 MPa(G) than the molding pressure during main heating was reached.

Next, one-side heating was performed by supplying steam from the other surface side of the mold until a pressure lower by 0.04 MPa(G) than the molding pressure during the main heating was reached. Then, the main heating was performed by supplying steam from both surfaces of the mold until the molding pressure during the main heating was reached. The molding pressure during the main heating is shown in Table 1.

Then, after the main heating was completed, the internal pressure of the mold was released to cool a molded article in the mold until the surface pressure due to foaming power of the molded article reached 0.04 MPa(G).

Next, the molded article taken out of the mold was allowed to stand in an oven at 80°C for 12 hours to perform curing. After the curing, the molded article was allowed to stand under the conditions of 50% relative humidity, 23°C, and 1 atm.

The molded article obtained by such an operation was subjected to measurement of density and compressive stress at 50% by the methods described below to evaluate the presence or absence of occurrence of bleed-out, and flame resistance.

### [Density]

The mass of the molded article was divided by the volume determined from external dimensions of the molded article and the density of the molded article was calculated by unit conversion.

### [Compressive Strength at 50%]

A rectangular parallelepiped-shaped test piece with dimensions of 50 mm in length, 50 mm in width, and 25 mm in thickness having no skin surfaces was cut out from the center portion of the molded article. Then, a compression test of the test piece was performed at a compression rate of 10 mm/min according to the method specified in JIS K7220:2006. A stress-strain curve was obtained based on the compression test. The compression test was performed in an atmosphere of 23°C. The compressive stress of the test piece at 50% strain was calculated based on the resulting stress-strain curve and the resulting value was taken as the compressive strength at 50% of the molded article.

### [Presence or Absence of Occurrence of Bleed-out]

The molded article obtained was stored for 7 days in a Geer oven set to an atmospheric temperature of 80°C. Then, the surface state of the molded article was visually observed to determine whether bleed-out occurred or not according to the following criteria:
NO: Powder derived from the bisphenol flame retardant is not seen on surfaces of the molded article; and
YES: Powder derived from the bisphenol flame retardant is seen on surfaces of the molded article.

### [Flame Resistance]

A vertical flame test under the UL94 standard was performed five times and the flame resistance was evaluated by the number of times V-0 was achieved. The thickness of test pieces was set to 13 mm.

Five test pieces were used for each test. However, when one of the five test pieces did not achieve the V-0 rating, other five test pieces were used to repeat the same vertical flame test only once. When all of the five test pieces achieved V-0, the second vertical flame test was deemed to achieve V-0.

The results are shown in Table 1. As for the ratio expressed by "O/O" in Table 1, the denominator refers to the number of times the vertical flame test was performed, and the numerator to the number of times V-0 was achieved in the vertical flame test. For example, a molded article in which V-0 was achieved five times in the vertical flame test performed five times is expressed by "5/5."

A molded article in which V-0 was achieved at least four times in the vertical flame test performed five times can be judged to exhibit a high level of flame resistance in a consistent manner. In particular, a molded article in which V-0 was achieved five times in the vertical flame test performed five times can be judged to exhibit a high level of flame resistance in a more consistent manner.

### (Example 9)

Foamed particles were fabricated in the same manner as in Example 2 except that no melamine flame retardant was blended thereinto. The resulting foamed particles were molded in a mold and a molded article obtained from the foamed particles was evaluated in the same manner as in Examples referred to above.

**Table 1**

| | | | EXAMPLE | | | | | | | | | COMPARATIVE EXAMPLE | | | |
|---|---|---|---|---|---|---|---|---|---|---|---|---|---|---|---|
| | | | 1 | 2 | 3 | 4 | 5 | 6 | 7 | 8 | 9 | 1 | 2 | 3 | 4 |
| RESIN PARTICLE | BROMINATED BISPHENOL FLAME RETARDANT (a) | BLENDING AMOUNT (%) | 7.5 | 7.5 | 7.5 | 7.5 | 7.5 | 7.5 | 7.5 | 9.0 | 7.5 | 15.0 | 7.5 | 7.5 | 5.0 |
| | ANTIMONY OXIDE (b) | BLENDING AMOUNT (%) | 3.8 | 3.8 | 3.8 | 3.8 | 3.8 | 3.8 | 3.8 | 4.5 | 3.8 | 7.5 | 3.8 | 3.8 | 2.5 |
| | INORGANIC HYPOPHOSPHITE(c) | BLENDING AMOUNT (%) | 0.45 | 0.15 | 0.15 | 0.15 | 0.09 | 0.16 | 0.12 | 0.15 | 0.15 | 0 | 0 | 1.6 | 0.45 |
| | MELAMINE FLAME RETARDANT (d) | BLENDING AMOUNT (%) | 0.09 | 0.03 | 0.03 | 0.03 | 0.018 | 0.02 | 0.06 | 0.03 | 0 | 0 | 0 | 0.20 | 0.09 |
| | X:(a)+(b)+(c) | BLENDING AMOUNT (%) | 11.7 | 11.4 | 11.4 | 11.4 | 11.3 | 11.4 | 11.4 | 13.7 | 11.4 | 22.5 | 11.3 | 12.9 | 8.0 |
| | (a)/X | MASS RATIO | 64.1 | 65.8 | 65.8 | 65.8 | 66.1 | 65.7 | 66.0 | 65.9 | 65.8 | 66.7 | 66.7 | 58.4 | 62.9 |
| | (b)/X | MASS RATIO | 32.1 | 32.9 | 32.9 | 32.9 | 33.1 | 32.9 | 33.0 | 33.0 | 32.9 | 33.3 | 33.3 | 29.2 | 31.4 |
| | (c)/X | MASS RATIO | 3.8 | 1.3 | 1.3 | 1.3 | 0.8 | 1.4 | 1.1 | 1.1 | 1.3 | 0 | 0 | 12.5 | 5.7 |
| | (c)/(a) | - | 0.060 | 0.020 | 0.020 | 0.020 | 0.012 | 0.021 | 0.016 | 0.017 | 0.020 | 0 | 0 | 0.21 | 0.09 |
| | (b)/(c) | - | 8.3 | 25 | 25 | 25 | 42 | 23 | 31 | 30 | 25 | - | - | - | 5.6 |
| | (c)/[(a)+(b)] | - | 0.040 | 0.013 | 0.013 | 0.013 | 0.008 | 0.014 | 0.011 | 0.011 | 0.013 | 0.00 | 0.00 | 0.14 | 0.060 |
| FOAMING CONDITION | FOAMING TEMPERATURE | °C | 151 | 151 | 147 | 147 | 151 | 151 | 151 | 151 | 151 | 151 | 151 | 151 | 151 |
| | FOAMING PRESSURE | MPa(G) | 1.6 | 1.6 | 2.0 | 2.2 | 1.6 | 1.6 | 1.6 | 1.6 | 1.6 | 1.6 | 1.6 | 1.6 | 1.6 |
| FOAMED PARTICLE | BULK DENSITY | kg/m³ | 180 | 180 | 90 | 60 | 180 | 180 | 180 | 180 | 180 | 180 | 180 | 180 | 180 |
| | MFR | g/10min | 11 | 11 | 11 | 11 | 11 | 11 | 11 | 12 | 11 | 15 | 11 | 11 | 9 |
| MOLDED ARTICLE | MOLDING PRESSURE | MPa(G) | 0.36 | 0.34 | 0.32 | 0.28 | 0.34 | 0.34 | 0.34 | 0.34 | 0.36 | 0.34 | 0.34 | 0.34 | 0.34 |
| | DENSITY | kg/m³ | 180 | 180 | 90 | 60 | 180 | 180 | 180 | 180 | 180 | 180 | 180 | EXCESSIVE SHRINKAGE OF MOLDED ARTICLE | 180 |
| | COMPRESSIVE STRESS AT 50% | MPa | 2.2 | 2.2 | 0.8 | 1.1 | 2.2 | 2.2 | 2.2 | 2.0 | 2.2 | 1.8 | 2.2 | | 2.4 |
| | PRESENCE OR ABSENCE OF OCCURRENCE OF BLEED-OUT | - | NO | NO | NO | NO | NO | NO | NO | NO | NO | YES | NO | | NO |
| | FLAME RESISTANCE (ACHIEVEMENT RATIO OF UL94 V-0) | - | 5/5 | 5/5 | 5/5 | 5/5 | 5/5 | 5/5 | 5/5 | 5/5 | 5/5 | 5/5 | 3/5 | | 0/5 |

As shown in Table 1, the molded articles obtained in Examples 1 to 9 were those in which in-mold moldability was good, flame retardant bleed-out occurred less frequently, and excellent flame resistance was exhibited in a consistent manner.

As shown in Table 1, it was confirmed that bleed-out occurred when the brominated bisphenol flame retardant was blended in too large an amount (see in particular Comparative Example 1).

It was also confirmed that a molded article consistently exhibiting a high level of flame resistance (V-0) was less likely to be obtained when no inorganic hypophosphite was included (see in particular Comparative Example 2).

It was also confirmed that, when the inorganic hypophosphite was blended in too large an amount, foamed particles were more easily defoamed due to heating during molding to cause excessive shrinkage of a molded article, whereby a good molded article is less likely to be obtained (see in particular Comparative Example 3).

It was also confirmed that a molded article consistently exhibiting a high level of flame resistance (V-0) was less likely to be obtained when the brominated bisphenol flame retardant was blended in too small an amount (see in particular Comparative Example 4).

## Claims

1. Polypropylene-based resin foamed particles comprising:
a brominated bisphenol flame retardant; an antimony oxide;
and an inorganic hypophosphite, wherein:
the brominated bisphenol flame retardant, the antimony oxide, and the inorganic hypophosphite are blended in such amounts that a mass ratio of the brominated bisphenol flame retardant : the antimony oxide : the inorganic hypophosphite is 60 to 74.95 : 25 to 35 : 0.05 to 10, and
the brominated bisphenol flame retardant is blended into the foamed particles in an amount of 6 mass% or more but 10 mass% or less.

2. The polypropylene-based resin foamed particles according to claim 1, wherein the inorganic hypophosphite is blended into the polypropylene-based resin foamed particles in an amount of 0.05 mass% or more but 1 mass% or less.

3. The polypropylene-based resin foamed particles according to claim 1 or 2, wherein a mass ratio of the amount of the blended inorganic hypophosphite to the amount of the blended brominated bisphenol flame retardant is 0.01 or more but 0.08 or less.

4. The polypropylene-based resin foamed particles according to any one of claims 1 to 3, wherein a mass ratio of the amount of the blended antimony oxide to the amount of the blended inorganic hypophosphite is 7 or more but 50 or less.

5. The polypropylene-based resin foamed particles according to any one of claims 1 to 4, wherein the brominated bisphenol flame retardant is a brominated bisphenol A flame retardant.

6. The polypropylene-based resin foamed particles according to any one of claims 1 to 5, comprising a melamine flame retardant.

7. The polypropylene-based resin foamed particles according to any one of claims 1 to 6, having a bulk density of 10 kg/m³ or more but 200 kg/m³ or less.

8. A molded article of the polypropylene-based resin foamed particles according to any one of claims 1 to 7, the molded article being obtained by molding the polypropylene-based resin foamed particles in a mold.
